# EUROPEAN PATENT APPLICATION

(11) **EP 4 730 550 A1**
(43) Date of publication of application: **22.04.2026**
(21) Application number: 25199696.3
(22) Date of filing: 02.09.2025
(51) Int. Cl.: H01M 50/543, H01M 50/566, H01M 50/562

(54) **SECONDARY BATTERY, BATTERY MODULE, AND METHOD FOR MANUFACTURING SECONDARY BATTERY**

(30) Priority: 11.09.2024 KR 20240124171
(71) Applicant: SAMSUNG SDI CO., LTD., Yongin-si, Gyeonggi-do 17084 (KR)
(72) Inventor: Yoon, Tae Jin, 16678 Suwon-si, Gyeonggi-do (KR); Ryu, Sang Hyun, 16678 Suwon-si, Gyeonggi-do (KR); Roh, Jae Hoon, 16678 Suwon-si, Gyeonggi-do (KR); Heo, Hoe Jun, 16678 Suwon-si, Gyeonggi-do (KR); Kim, Dong Han, 16678 Suwon-si, Gyeonggi-do (KR); An, Seong Bae, 16678 Suwon-si, Gyeonggi-do (KR); Kim, Geon Soo, 16678 Suwon-si, Gyeonggi-do (KR)
(74) Representative: Gulde & Partner

(57) **Abstract**

A secondary battery, a battery module, and/or a method for manufacturing the secondary battery are disclosed. A secondary battery includes a case accommodating an electrode assembly, and a terminal coupled to the case, and the terminal includes a softened region. The softened region is formed on an upper surface of the terminal in which the terminal is scheduled to be connected to a busbar.

## Description

### BACKGROUND

### 1. Field

Aspects of embodiments of the present disclosure relate to a secondary battery, a battery module, and/or a method for manufacturing the secondary battery.

### 2. Discussion of Related Art

Generally, the demand for secondary batteries with high energy density and high capacity is rapidly increasing with the rapid supply of electronic devices using batteries such as mobile phones, notebook computers, electric vehicles, and the like. Accordingly, research and development for improving the performance of lithium secondary batteries is being actively conducted.

A lithium secondary battery is a battery including a positive electrode and a negative electrode including an active material capable of intercalating and deintercalating lithium ions, and an electrolyte, and produces electrical energy due to oxidation and reduction reactions when lithium ions are intercalated/deintercalated into/from the positive electrode and the negative electrode.

### SUMMARY

The invention is defined by the appended claims. The description that follows is subjected to this limitation. Any disclosure lying outside the scope of said claims is only intended for illustrative as well as comparative purposes.

According to an aspect of embodiments of the present invention, a secondary battery in which at least a portion of a terminal is softened, a battery module, and/or a method for manufacturing the secondary battery, are provided. According to another aspect of embodiments of the present invention, a secondary battery having improved weldability with a connection member, a battery module, and/or a method for manufacturing the secondary battery, are provided.

According to another aspect of embodiments of the present invention, a secondary battery in which a pattern is formed on at least a portion of a terminal, a battery module, and/or a method for manufacturing the secondary battery, are provided.

According to another aspect of embodiments of the present invention, a secondary battery in which at least a portion of a terminal has roughness, a battery module, and/or a method for manufacturing the secondary battery, are provided.

However, aspects and technical problems to be solved by the present disclosure are not limited to the above-described aspects and problems to be solved, and other aspects and problems to be solved which are not mentioned, will be clearly understood by those skilled in the art from the description of the invention disclosed below.

According to one or more embodiments of the present invention, a secondary battery includes a case accommodating an electrode assembly and a terminal coupled to the case, wherein the terminal includes a softened region. The softened region is formed on an upper surface of the terminal in which the terminal is scheduled to be connected to a busbar.

According to one or more embodiments of the present invention, a battery module includes a plurality of secondary batteries each including an electrode assembly, a case accommodating the electrode assembly, and a terminal coupled to the case and including a softened region, a housing accommodating the plurality of secondary batteries, and a connection member joined to the softened region and connecting at least two or more secondary batteries among the plurality of secondary batteries.

According to one or more embodiments of the present invention, a method for manufacturing a secondary battery includes forming a softened region.

### BRIEF DESCRIPTION OF THE DRAWINGS

The following drawings included with this specification illustrate some embodiments of the present invention and, together with the detailed description of the invention described below, are provided for further understanding of the technical idea of the present invention; however, the present invention is not to be construed as being limited to matters described in such drawings, in which:
FIG. 1 is a perspective view schematically illustrating a configuration of a battery module according to an embodiment of the present disclosure;
FIG. 2 is a plan view schematically illustrating a configuration of the battery module of FIG. 1;
FIG. 3 is a perspective view schematically illustrating a secondary battery according to an embodiment of the present invention;
FIG. 4 is a cross-sectional view schematically illustrating a configuration of the secondary battery of FIG. 3;
FIG. 5 is a cross-sectional view schematically illustrating a terminal;
FIGS. 6A to 6C are top views schematically illustrating the terminal according to an embodiment of the present invention;
FIG. 7 is a top view of the terminal according to an embodiment of the present invention;
FIG. 8 is a view illustrating an example of a pattern according to an embodiment of the present invention;
FIG. 9 is a graph illustrating a difference in hardness between a terminal including a softened region and a terminal not including a softened region according to an embodiment of the present invention; and
FIG. 10 is a graph for describing weld strength according to the difference in hardness.

### DETAILED DESCRIPTION

Herein, some embodiments of the present disclosure will be described in further detail with reference to the accompanying drawings. The terms or words used in the present specification and claims are not to be limitedly interpreted as having general or dictionary meanings and are to be interpreted as having meanings and concepts that are consistent with the technical idea of the present disclosure on the basis of the principle that an inventor can be his/her own lexicographer to appropriately define concepts of terms to describe his/her invention in the best way.

Further, when used in the present specification, "comprise" or "include" and/or "comprising" or "including" specify the presence of mentioned shapes, numbers, steps, operations, members, elements and/or groups thereof, and do not exclude the presence or addition of one or more other shapes, numbers, steps, operations, members, elements and/or groups thereof.

Further, to help understanding of the present disclosure, the accompanying drawings may not be drawn to actual scale, and the sizes of some components may be exaggerated. In addition, the same reference numerals may be given to the same components in different embodiments.

The description that two objects to be compared are "the same" means that that the two objects are the same or substantially the same. Accordingly, "the same" or "substantially the same" may include a deviation considered as a low level in the art, for example, a deviation within 5%. Further, uniformity of a parameter in a certain region may mean uniformity from an average point of view.

Although "first," "second," and the like may be used to describe various components, these components are not limited by these terms. These terms are used to distinguish one component from another component, and unless otherwise stated, a first component may be a second component.

Throughout the specification, unless otherwise stated, each component may be singular or plural.

Further, when it is disclosed that a certain component is "on," "connected to," or "coupled to" another component, it is to be understood that the components may be directly connected or coupled to each other, or that another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered to be synonymous with the term "utilize." As used in the present specification, the terms "substantially," "about," and other similar terms are used as terms of approximation rather than terms of degree, and are intended to consider an inherent variation in measured or calculated values recognized by those skilled in the art.

Although the terms "first," "second," "third," and the like may be used in the present specification to describe various elements, components, regions, layers and/or sections, these elements, components, regions, layers and/or sections are not to be limited by these terms. These terms are used to distinguish one element, component, region, drawing layer, or section from another element, component, region, drawing layer, or section. Accordingly, a first element, component, region, layer, or section to be described below may be referred to a second element, component, region, layer, or section without departing from the teachings of the present disclosure.

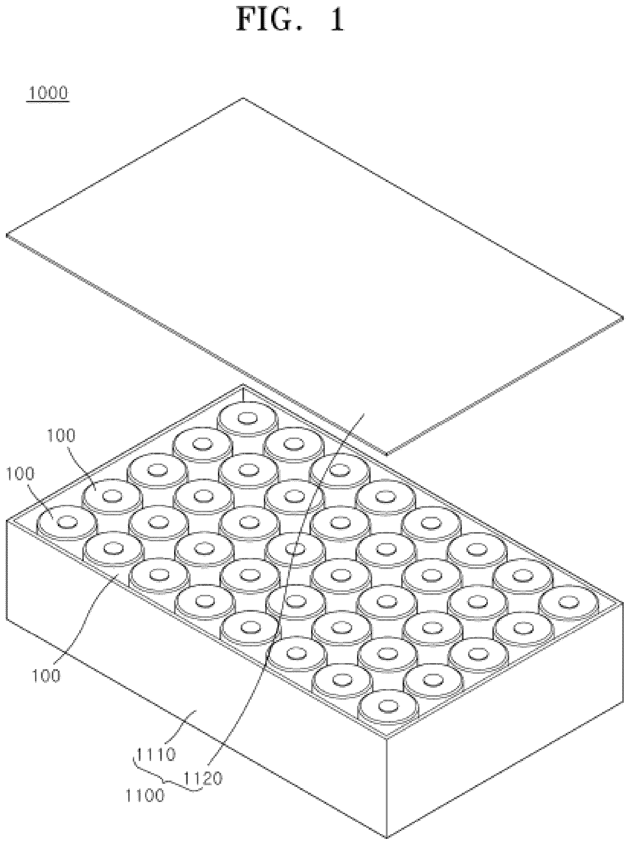

FIG. 1 is a perspective view schematically illustrating a configuration of a battery module according to an embodiment of the present disclosure.

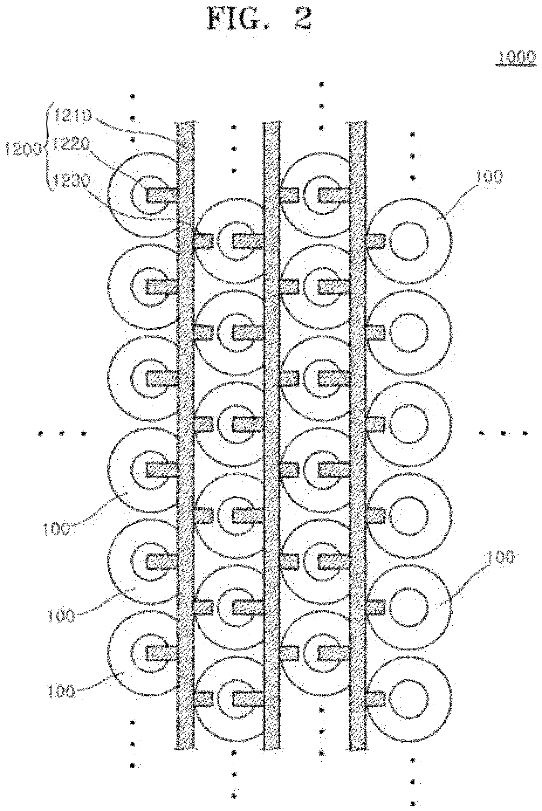

FIG. 2 is a plan view schematically illustrating the configuration of the battery module of FIG. 1.

Referring to FIGS. 1 and 2, a battery module 1000 according to one or more embodiments includes a housing 1100, a secondary battery 100, and a busbar 1200.

The housing 1100 may form a general exterior of the battery module and provide a space where the secondary battery 100 may be accommodated.

The housing 1100 according to an embodiment may include a housing body 1110 and a cover 1120.

The housing body 1110 may have a shape of a box with an empty interior and an open side. However, a cross-sectional shape of the housing body 1110 is not limited to the quadrangular shape shown in FIG. 1, and may have any of various shapes, such as a polygonal shape, a circular shape, an oval shape, and the like.

The cover 1120 may be coupled to the housing body 1110 and close the inner space of the housing body 1110. For example, the cover 1120 may be formed to have a generally plate shape and may be disposed to face the open side of the housing body 1110. The cover 1120 may be fixed to the housing body 1110 by any of various types of coupling methods, such as bolting, welding, fitting, and the like.

The secondary battery 100 may function as a unit structure which stores and supplies power in the battery module.

A plurality of secondary batteries 100 is provided. The plurality of secondary batteries 100 may be disposed to form any of various patterns, such as a grid shape, a zigzag shape, and the like, in the housing 1100. The plurality of secondary batteries 100 may be arranged parallel to each other. A number of the secondary batteries 100 may be designed in various ways depending on a size, shape, and the like of the housing 1100. A configuration of the secondary battery will be described below.

The busbar 1200 electrically connects the plurality of secondary batteries 100 to each other. The plurality of secondary batteries 100 may be connected by the busbar 1200 in series or parallel. For example, the busbar 1200 may connect the secondary batteries 100 disposed in a same row in parallel with each other, and connect the secondary batteries 100 disposed in two adjacent rows in series with each other in the housing 1100. The busbar 1200 is formed of an electrically conductive material, such as copper, aluminum, nickel, or the like.

Referring to FIG. 2, the busbar 1200 according to the embodiment may include a main bus bar 1210, a first branch bus bar 1220, and a second branch bus bar 1230.

The main busbar 1210 may be disposed between rows of neighboring secondary batteries 100. A plurality of main busbars 1210 may be provided. The main busbar 1210 may extend in a straight line between the rows of secondary batteries 100, or, in an embodiment, may be regularly bent in a zigzag shape. The plurality of main busbars 1210 may be individually disposed between different rows of neighboring secondary batteries 100. The plurality of main busbars 1210 may be electrically connected to each other.

In an embodiment, the first branch busbar 1220 may extend from the main busbar 1210 toward a rivet, or terminal, of the secondary battery 100 described below. The first branch busbar 1220 may be mechanically and electrically connected to the rivet by laser welding, ultrasonic welding, or the like.

The second branch busbar 1230 may extend from the main busbar 1210 toward a case of the secondary battery 100 described below. The second branch busbar 1230 may be mechanically and electrically connected to the case by laser welding, ultrasonic welding, or the like.

Herein, the secondary battery 100 according to an embodiment of the present invention will be described.

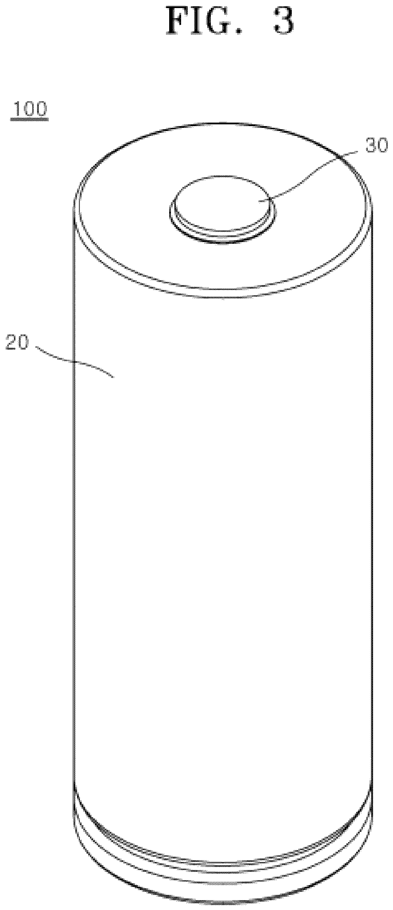

FIG. 3 is a perspective view schematically illustrating a configuration of the secondary battery according to an embodiment of the present invention.

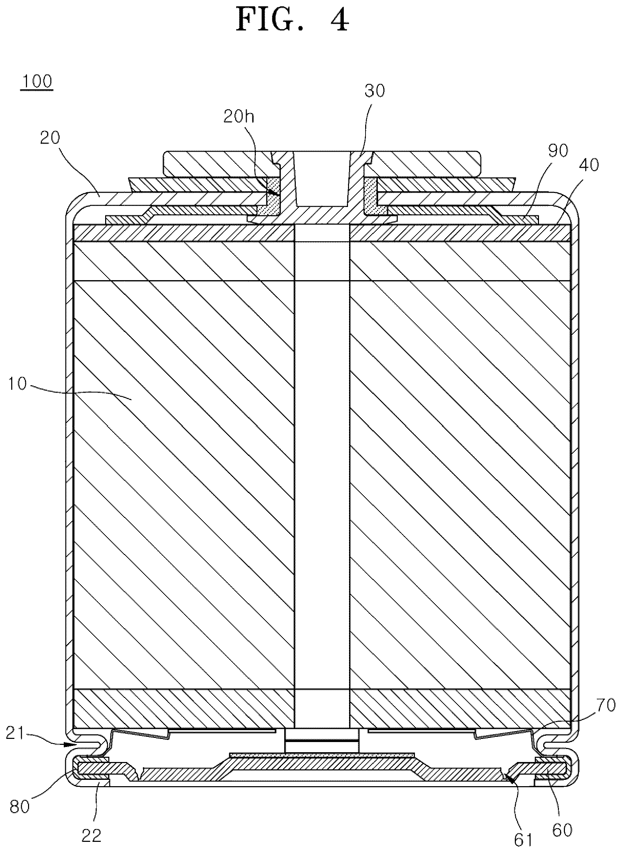

FIG. 4 is a cross-sectional view schematically illustrating the configuration of according to an embodiment of the present invention.

In FIGS. 3 and 4, reference numeral 100 denotes the secondary battery according to an embodiment of the present invention.

Referring to FIGS. 3 and 4, the secondary battery 100 according to an embodiment (including, for example, the secondary battery 100 shown in FIGS. 1 and 2) includes an electrode assembly 10 and a case 20 that accommodates the electrode assembly 10. The secondary battery 100 further includes a terminal 30 inserted into a hole 20h formed in a side of the case 20 and electrically connected to the electrode assembly 10, and a cap plate 60 covering an opening formed in another side of the case 20. However, components of the secondary battery 100 are not limited to the components shown in FIG. 1, and the secondary battery 100 may include only some of the components shown in FIGS. 3 and 4, and/or may further include other components in addition to the components shown in FIGS. 3 and 4.

Herein, an example in which the secondary battery 100 is a cylindrical lithium-ion secondary battery will be described. However, the present invention is not limited thereto, and the secondary battery may be a lithium polymer battery or a prismatic battery, for example.

The electrode assembly 10 may function as a unit structure which performs charging and discharging operations of power in the secondary battery 100.

The electrode assembly 10 includes a first electrode and a second electrode. The first electrode is a positive electrode or a negative electrode. The second electrode is a positive electrode or a negative electrode and has a different polarity from the first electrode.

In addition, the electrode assembly 10 may further include a separator between the first electrode and the second electrode. The separator may prevent or substantially prevent the first electrode and the second electrode from coming into contact with each other, and may prevent or substantially prevent a short circuit from occurring between the first electrode and the second electrode. Accordingly, the electrode assembly 10 may be formed by stacking the first electrode, the second electrode, and the separator provided between the first electrode and the second electrode.

In an embodiment, the electrode assembly 10 may form a cylindrical shape, and the stacked structure including the first electrode, the second electrode, and the separator may be wound to form a jellyroll. For example, the electrode assembly 10 may have a shape that is wound clockwise or counterclockwise around a winding axis. A cross-sectional shape of the electrode assembly 10 may have any of various shapes, such as an oval shape, a polygonal shape, and the like, in addition to the circular shape. Here, the winding axis may refer to a straight line passing through a center portion of the electrode assembly 10.

A further detailed description of each component of the electrode assembly 10 is as follows.

### Positive electrode active material

As the positive electrode active material, a compound capable of reversible intercalation and deintercalation of lithium (a lithiated intercalation compound) may be used. In an embodiment, one or more of composite oxides of lithium and a metal selected from cobalt, manganese, nickel, and a combination thereof may be used.

The composite oxide may be a lithium transition metal composite oxide, and examples may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{bXc}O_{2-αDα} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂GpO₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material can realize high capacity and thus can be applied to high capacity, high density lithium batteries.

### Positive electrode

The positive electrode for the secondary battery 100 may include a current collector and a positive electrode active material layer formed on the current collector. The positive electrode active material layer may include a positive electrode active material, and may further include a binder and/or a conductive material.

As an example, the positive electrode may further contain an additive that may serve as a sacrificial positive electrode.

In an embodiment, the content of the positive electrode active material may be in a range from 90 wt% to 99.5 wt% based on 100 wt% of the positive electrode active material layer, and the content of the binder and the conductive material may each be in a range from 0.5 wt% to 5 wt% based on 100 wt% of the positive electrode active material layer.

The binder may attach the positive electrode active material particles to each other well and also attach the positive electrode active material to the current collector well. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, etc., but are not limited thereto.

The conductive material may impart conductivity to the electrode, and in a configured battery, any suitable electrically conductive material that does not cause a chemical change may be used. Examples of the conductive material may include a carbon-based material, such as natural graphite, artificial graphite, carbon black, acetylene black, Ketjen black, carbon fibers, carbon nanofibers, carbon nanotubes; a metal-based material in the form of a metal powder or metal fibers containing copper, nickel, aluminum, silver, etc.; a conductive polymer, such as a polyphenylene derivative; or a mixture thereof.

In an embodiment, Al may be used as the current collector but embodiments are not limited thereto.

### Negative electrode active material

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. Examples of the crystalline carbon may include graphite, such as amorphous, plate-like, flaky, spherical, or fibrous natural graphite or artificial graphite, and examples of the amorphous carbon may include soft carbon, hard carbon, mesophase pitch carbide, calcined coke, etc.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or a Sn-based negative electrode active material may be used as the material capable of doping and dedoping lithium. The Si-based negative electrode active material may include silicon, a silicon-carbon composite, SiOₓ (0<x≤2), a Si-Q alloy (Q is selected from an alkali metal, an alkaline earth metal, a group 13 element, a group 14 element (excluding Si), a group 15 element, a group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may be located between the silicon primary particles, and, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core containing crystalline carbon and silicon particles and an amorphous carbon coating layer located on the surface of the core.

The Si-based negative electrode active material or the Sn-based negative electrode active material may be used in combination with the carbon-based negative electrode active material.

### Negative electrode

The negative electrode for the secondary battery 100 may include a current collector and a negative electrode active material layer located on the current collector. The negative electrode active material layer may include a negative electrode active material and may further include a binder and/or a conductive material.

In an embodiment, for example, the negative electrode active material layer may include 90 wt% to 99 wt% of the negative electrode active material, 0.5 wt% to 5 wt% of the binder, and 0 wt% to 5 wt% of the conductive material.

The binder may attach the negative electrode active material particles well and also attach the negative electrode active material to the current collector well. A non-aqueous binder, an aqueous binder, a dry binder, or a combination thereof may be used as the binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, a cellulose-based compound may be further contained to impart viscosity. This cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder is a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The conductive material may impart conductivity to the electrode, and in a configured battery, any suitable electrically conductive material that does not cause a chemical change may be used. Specific examples may include a carbon-based material, such as natural graphite, artificial graphite, carbon black, acetylene black, Ketjen black, carbon fibers, carbon nanofibers, carbon nanotubes; a metal-based material in the form of a metal powder or metal fibers containing copper, nickel, aluminum, silver, etc.; a conductive polymer, such as a polyphenylene derivative; or a mixture thereof.

As the negative electrode current collector, one selected from copper foil, nickel foil, stainless steel foil, titanium foil, nickel foam, copper foam, a conductive metal-coated polymer substrate, and a combination thereof may be used.

### Separator

Depending on a type of secondary battery 100, a separator may be present between the positive electrode 10 and the negative electrode 20. As the separator, polyethylene, polypropylene, polyvinylidene fluoride, or a multilayered film of two or more layers thereof may be used, and a mixed multilayered film, such as a polyethylene/polypropylene two-layer separator, a polyethylene/polypropylene/polyethylene three-layer separator, or a polypropylene/polyethylene/polypropylene three-layer separator may be used as the separator.

The separator may include a porous substrate and a coating layer containing an organic material, an inorganic material, or a combination thereof located on one or both, or opposite, sides of the porous substrate.

The porous substrate may be a polymer film formed of a polymer selected from polyolefins, such as polyethylene and polypropylene, polyesters, such as polyethylene terephthalate and polybutylene terephthalate, polyacetal, polyamide, polyimide, polycarbonate, polyether ketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, and polytetrafluoroethylene (e.g., Teflon), or a copolymer or mixture of two or more thereof.

In an embodiment, the organic material may include a polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

The case 20 accommodates the electrode assembly 10. The case 20 seals the accommodated electrode assembly 10 along with an electrolyte.

### Electrolyte

The electrolyte for the secondary battery 100 may include a non-aqueous organic solvent and a lithium salt.

The non-aqueous organic solvent may function as a medium through which ions involved in the electrochemical reaction of the battery may move.

The non-aqueous organic solvent may be a carbonate-based, ester-based, ether-based, ketone-based, or alcohol-based solvent, an aprotic solvent, or a combination thereof.

The carbonate-based solvent may include any of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include any of methyl acetate, ethyl acetate, n-propyl acetate, dimethyl acetate, methyl propionate, ethyl propionate, decanolide, mevalonolactone, valerolactone, caprolactone, and the like.

The ether-based solvent may include any of dibutyl ether, tetraglyme, diglyme, dimethoxyethane, 2-methyltetrahydrofuran, 2,5-dimethyltetrahydrofuran, tetrahydrofuran, and the like. In an embodiment, the ketone-based solvent may include cyclohexanone, or the like. As the alcohol-based solvent, ethyl alcohol, isopropyl alcohol, or the like may be used, and, as the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane or the like may be used.

The non-aqueous organic solvent may be used alone or in a combination of two or more.

In an embodiment, if using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the lithium battery and promoting the movement of lithium ions between the positive electrode and the negative electrode. Representative examples of the lithium salt include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

As described above, the case 20 is sealed after receiving the electrode assembly 10 and the electrolyte. For example, the case 20 may be sealed by the cap plate 60.

The case 20 forms a general exterior of the secondary battery 100. In an embodiment, the case 20 includes an upper surface forming a cylindrical upper portion and a side surface which is connected to an outer surface of the upper surface and extends perpendicularly from the upper surface to form a side portion.

The case 20 may have a hole 20h formed in the upper surface thereof. The hole 20h is formed by passing through the upper surface of the case 20. The hole 20h may be located in the center of the upper surface of the case 20. The hole 20h may be formed, for example, at a position perpendicular to a winding core of the electrode assembly 10 and the ground. The shape of the hole 20h may correspond to a shape of the terminal 30. For example, if a cross-section of the terminal 30 is circular, a cross-section of the hole 20h may be formed in a circular shape. In this case, the diameter of the cross-section of the hole 20h is larger than the diameter of the cross-section of the terminal 30.

The case 20 may have a cylindrical lower portion that is open. The case 20 may have an interior sealed by having the opening sealed by the cap plate 60. Accordingly, the case 20 may prevent or substantially prevent the electrolyte from leaking to the outside and protect the electrode assembly 10.

The case 20 may be made of, for example, steel, stainless steel, aluminum, an aluminum alloy, a combination thereof, or an equivalent thereof.

The cap plate 60 seals the case 20 while covering the opening in the case 20.

In an embodiment, the secondary battery 100 may further include a gasket 80 to further ensure that the case 20 is sealed. The gasket 80 is formed, for example, in a ring shape. The gasket 80 may be positioned between the cap plate 60 and the inner surface of the case 20 while surrounding the outer surface of the cap plate 60. Accordingly, the gasket 80 may prevent or substantially prevent the electrolyte inside the secondary battery 100 from leaking to the outside or causing safety problems.

In an embodiment, a beading portion 21 may be formed in the case 20 to fix the position of the cap plate 60 relative to the opening of the case 20. For example, the beading portion 21 is formed on the lower side of the case 20. The beading portion 21 is formed by recessing the case 20 inward. The beading portion 21 prevents or substantially prevents the cap plate 60 from further entering the case 20 from the opening of the case 20 due to the recessed portion. In an embodiment, a crimping portion 22 may be further formed in the case 20 to fix the position of the cap plate 60 relative to the opening of the case 20. The crimping portion 22 may be formed by curling an end of the opening of the case 20 toward the inside of the case 20. For example, the crimping portion 22 may be formed by being bent toward the case 20 after the cap plate 60 is provided in the opening of the case 20. Accordingly, the cap plate 60 may cover the opening of the case 20.

In an embodiment, the cap plate 60 may concurrently (e.g., simultaneously) function as a vent. In an embodiment, for example, the cap plate 60 may include a groove 61. The groove 61 may rupture if the pressure inside the case 20 increases or the temperature increases. The groove 61 may rupture to discharge gas generated inside the case 20 to the outside.

In an embodiment, the case 20 is electrically connected to the electrode assembly 10 accommodated in the case 20. In an embodiment, for example, the case 20 is electrically connected to the second electrode. The second electrode may be, for example, a negative electrode.

The secondary battery 100 may further include a second current collector plate 70 located below the electrode assembly 10 to electrically connect the case 20 and the second electrode. For example, the second current collector plate 70 may be located between the bottom of the electrode assembly 10 and the top of the cap plate 60. In this case, the second current collector plate 70 and the cap plate 60 may be insulated from each other by the gasket 80. In an embodiment, the second current collector plate 70 is, for example, a negative electrode current collector plate. The second current collector plate 70 is connected to the second electrode. For example, the second current collector plate 70 is connected to a tab of the second electrode. In an embodiment, the second current collector plate 70 is coupled to the case 20. Accordingly, the case 20 may be electrically connected to the second electrode and have the same polarity as the second electrode. That is, for example, the case 20 may have a negative polarity.

The terminal 30 is inserted into the hole 20h formed in the upper surface of the case 20. The terminal 30 is inserted into the hole 20h and is electrically connected to the electrode assembly 10 accommodated in the case 20. For example, the terminal 30 is electrically connected to the first electrode. The first electrode may be, for example, a positive electrode.

The secondary battery 100 may further include a first current collector plate 40 located at the top of the electrode assembly 10 to electrically connect the terminal 30 and the first electrode. The first current collector plate 40 is, for example, a positive electrode current collector plate. The first current collector plate 40 is connected to the first electrode. For example, the first current collector plate 40 is connected to a tab of the first electrode. In addition, the first current collector plate 40 is connected to the terminal 30. Accordingly, the terminal 30 may be electrically connected to the first electrode and have the same polarity as the first electrode. That is, for example, the terminal 30 may have a positive polarity.

In this case, the terminal 30 includes or essentially consists of a conductive material for electrical connection with the first electrode. In an embodiment, for example, the terminal 30 includes or consists of a metal. In an embodiment, for example, the terminal 30 is formed of aluminum (Al).

In an embodiment, the secondary battery 100 may further include an insulating layer 90. The insulating layer 90 may be provided on the first current collector plate 40. The insulating layer 90 prevents or substantially prevents the first current collector plate 40 and the case 20 from being electrically connected.

Through this configuration, the secondary battery 100 according to an embodiment of the present invention may provide a battery having improved capacity by removing the beading portion from an upper portion thereof. In addition, the secondary battery 100 may avoid safety or cost problems that may occur if the secondary battery 100 explodes upward by positioning the cap plate 60 at the lower portion thereof.

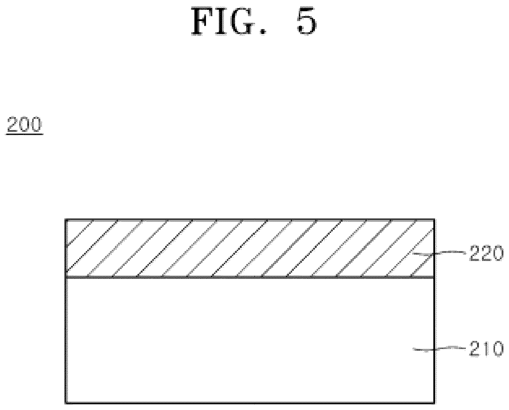

FIG. 5 is a cross-sectional view schematically illustrating a terminal.

In FIGS. 1 to 4, the secondary battery 100 and the battery module 1000 including the secondary battery 100 according to an embodiment of the present invention are described. As described above, the battery module 1000 includes a plurality of secondary batteries 100.

The plurality of secondary batteries 100 are connected to a connection member to be electrically connected to each other and/or the outside. The connection member may include, for example, a busbar 1200 and/or a tab (not shown). Herein, a case in which the connection member includes the busbar 1200 is described as an example. For example, if the secondary battery 100 includes a cap assembly (not shown), the secondary battery 100 may be connected to the busbar 1200 through the cap assembly. For example, if the secondary battery 100 includes a terminal 30 (see FIGS. 3 to 4), the secondary battery 100 may be connected to the busbar 1200 through the terminal 30 (see FIGS. 3 to 4).

As the demand for the secondary battery 100 increases, the demand for a high-capacity and safe battery module 1000 also increases.

In order to increase the capacity of the battery module 1000, the battery module 1000 includes a larger number of secondary batteries 100 and/or the secondary batteries 100 have an increased capacity. In addition, as the size of the secondary battery 100 increases, high capacity may be achieved.

In addition, to improve the safety of the battery module 1000, it is desirable that the secondary battery 100 stably receive electricity and receive less impact from the outside.

One or more embodiments of the present invention provides a secondary battery 100 and/or a battery module 1000 that is safe and has high capacity. For example, the battery module 1000 according to one or more embodiments of the present invention includes a plurality of secondary batteries 100. In an embodiment, the battery module 1000 may include a plurality of secondary batteries 100 that have an increased size. In this case, to improve the safety of the battery module 1000, a method in which the secondary battery 100 may be stably connected to the inside and outside of the battery module 1000 is provided. For example, the battery module 1000 provides a method in which the plurality of secondary batteries 100 may be coupled to the busbar 1200 with high strength. Such a method will be described in further detail below.

In FIG. 5, 200 illustrates a terminal (such as the terminal 30 of FIGS. 3 to 4) according to an embodiment of the present invention.

As shown in FIG. 5, the terminal 200 includes a metal layer 210 and a plating layer 220 formed on the metal layer 210.

FIGS. 1 to 5 illustrate a structure in which the secondary battery 100 is connected to the busbar 1200 through the terminal 200, but the secondary battery 100 according to one or more embodiments of the present disclosure is not limited thereto. The secondary battery 100 may be connected to the busbar 1200 and/or the tab through the cap assembly and/or the cap plate. In this case, the description of the terminal 200 according to an embodiment of the present disclosure may be applied to the cap assembly and/or the cap plate in a same or similar manner.

The metal layer 210 performs a basic role of the terminal 200. For example, the metal layer 210 is electrically connected to the electrode assembly 10. The metal layer 210 serves as a passage through which a current may move from the outside toward the electrode assembly 10 or a current may move from the electrode assembly 10 toward the outside.

Accordingly, the metal layer 210 includes an electrically conductive material. For example, the metal layer 210 may include a metal, such as aluminum (Al), copper (Cu), nickel (Ni), etc.

The plating layer 220 is formed by plating on the surface of the metal layer 210. The plating layer 220 may protect the metal layer 210. In addition, the plating layer 220 may assist physical properties of the metal layer 210. For example, the plating layer 220 may prevent or substantially prevent oxidation of the metal layer 210 and/or improve the strength of the metal layer 210. The plating layer 220 may include, for example, a metal, such as nickel (Ni).

In an embodiment, the plating layer 220 may be formed to have a thickness greater than or equal to an intended thickness of the plating layer 220. In an embodiment, the plating layer 220 may additionally form an oxide film when contacting air. In an embodiment, the plating layer 220 may have a contaminant film deposited inside and outside the plating layer 220 when contacting the outside.

The plating layer 220 including such an additional plating layer, oxide film, contaminant film, and the like may adversely affect the formation of a welded portion between the terminal 200 and the busbar 1200. For example, if quality dispersion occurs in the plating layer 220, or if an oxide film or contaminant film occurs inside or outside the plating layer 220, the weld strength between the terminal 200 and the busbar 1200 may be lowered. In this case, the capacity of the secondary battery 100, respectively the battery module 1000 including the secondary battery 100 may be reduced.

Therefore, the secondary battery 100 according to one or more embodiments of the present invention includes a case 20 accommodating the electrode assembly 10 and a terminal 200 coupled to the case 20. In this case, the terminal 200 includes a softened region.

In this case, the softened region represents a region having a low hardness.

The softened region represents a region with a lower hardness than a non-softened region. Accordingly, when the hardnesses of a partial region and another partial region of the terminal 200 are different from each other, it may be considered that the softened region according to an embodiment of the present disclosure is included.

In an embodiment, the softened region represents a region having a Vickers hardness in the range of 110 Hv to 500 Hv measured according to DIN EN ISO 6507-1.

In an embodiment, the softened region may be formed on the entire outer surface of the terminal 200. In this case, the softened region is formed on the upper surface of the terminal 200. The softened region is formed in a region in which the terminal 200 is scheduled to be connected to the busbar 1200.

In this case, the softened region may be formed on the plating layer 220. The softened region may be formed on the plating layer 220 to improve the quality of the terminal 200.

In an embodiment, the softened region may be formed, for example, by performing surface treatment on the plating layer 200. In this case, the surface treatment may include, for example, at least one of laser treatment, polishing treatment, and/or etching treatment. The laser treatment is a treatment in which a softened region is formed on the surface of the terminal 30 by irradiating the terminal 30 with a laser. The polishing treatment is a treatment in which a softened region is formed on the surface of the terminal 30 by applying a physical force to the terminal 30. The etching treatment is a treatment in which a softened region is formed on the surface of the terminal 30 by applying a chemical treatment to the terminal 30.

In this way, the secondary battery 100 according to an embodiment of the present disclosure provides a method of improving the coupling and/or weld strength between the secondary battery 100 and the busbar 1200 through the terminal 200 including the softened region.

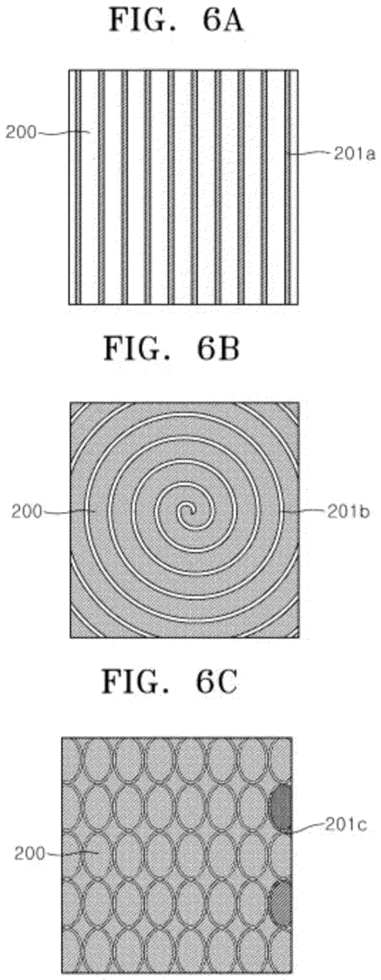

FIGS. 6A to 6C are top views schematically illustrating an electrode according to an embodiment of the present invention.

In FIGS. 6A to 6C, an example of the softened region formed on the terminal 200 will be described.

The softened region according to an embodiment of the present invention includes, for example, a pattern. The pattern may be formed, for example, by engraving, embossing, or a combination thereof. The pattern may be formed, for example, in a straight line, a spiral shape, a dot shape, a circle, a polygon, or a combination thereof. However, the pattern according to an embodiment of the present disclosure is not limited to the contents described with respect to FIGS. 6A to 6C, and the pattern may include any of shapes that may be formed on the terminal 200 by engraving, embossing, or a combination thereof.

FIG. 6A shows an example in which a pattern is formed in a straight line as in a linear pattern 201a. In an embodiment, as shown in FIG. 6A, the linear pattern 201a may be formed as a plurality of straight lines formed spaced apart at equal intervals. In an embodiment, a thickness of the straight line and the interval between the straight lines may be set differently according to the size of the terminal 200. However, unlike FIG. 6A, the linear pattern 201a may be formed as a plurality of straight lines having the same thickness, which are formed spaced apart at different intervals. In an embodiment, the linear pattern 201a may be formed as a plurality of straight lines formed with different thicknesses, which are spaced apart at equal intervals. In an embodiment, the linear pattern 201a may be formed as a plurality of straight lines formed with different thicknesses, which are spaced apart at different intervals.

FIG. 6B shows an example in which a pattern is formed in a spiral shape as in a spiral pattern 201b. The spiral pattern 201b may be formed, for example, in a spiral shape that spirals out from the center of the terminal 200. In an embodiment, the spiral pattern 201b may be formed to have a uniform thickness from the center toward the outer portion. In an embodiment, the spiral pattern 201b may be formed with a thickness that gradually increases from the center toward the outer portion. In an embodiment, the spiral pattern 201b may be formed with a thickness that gradually decreases from the center toward the outer portion. In an embodiment, the spiral pattern 201b may be formed with a thickness that repeatedly increases or decreases from the center toward the outer portion.

FIG. 6C shows an example in which a pattern is formed in a circular shape as in a circular pattern 201c. The circular pattern 201c may include, for example, a plurality of circular shapes.

In an embodiment, the plurality of circular shapes may be formed to have a same size. In an embodiment, the plurality of circular shapes may be disposed adjacent to each other in a simple cubic (SC) structure, as shown in FIG. 6C. In an embodiment, the plurality of circular shapes may be disposed adjacent to each other in a face-centered cubic (FCC) structure, unlike in FIG. 6C. In an embodiment, the plurality of circular shapes may be disposed adjacent to each other in a body-centered cubic (BCC) structure, unlike in FIG. 6C.

In an embodiment, the plurality of circular shapes may have different sizes. In an embodiment, the plurality of circular shapes may form an inclusive relationship with each other to form a ⊚ shape. In an embodiment, the plurality of circular shapes may be disposed to come into contact with each other or spaced apart from each other without forming the inclusive relationship with each other.

The softened region according to an embodiment of the present invention may be formed, for example, by laser treatment.

In an embodiment, the laser treatment is, for example, a treatment in which a laser having a frequency in a range of 10 to 1000 kHz is irradiated onto the terminal 200 to form the softened region. In an embodiment, the laser treatment is a treatment in which a laser is irradiated onto the terminal 200 at a speed in a range of, for example, 10 to 10,000 mm/s to form the softened region. If the laser deviates from such a frequency range and/or irradiation speed, the weldability of the softened region may be degraded. Thus, in an embodiment, the laser is irradiated at a frequency, e.g., in the range of 10 to 1000 kHz and/or at a speed in the range of 10 to 10,000 mm/s. Through this, the softened region may be formed with a hardness of, for example, 500 Hv or less.

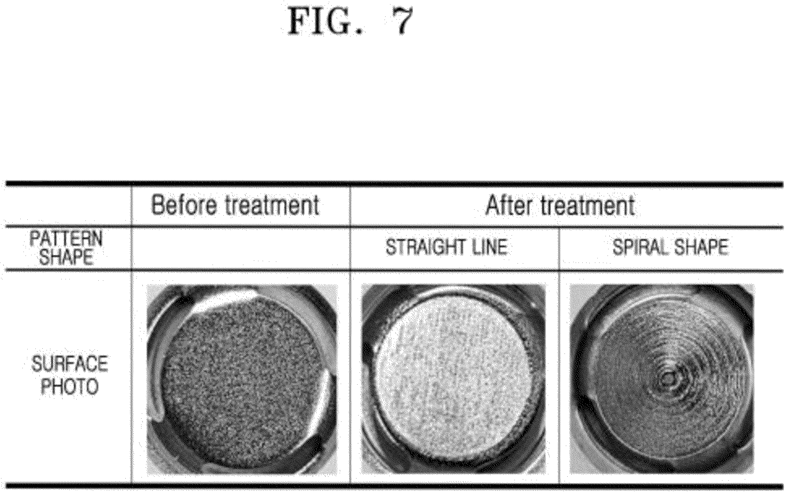

FIG. 7 is a top view of an electrode according to an embodiment of the present invention.

FIG. 7 shows a terminal before the softened region was formed (Before treatment) and a terminal after the softened region was formed (After treatment).

As can be seen from the terminals before and after the softened region is formed in FIG. 7, the terminal after the softened region is formed may include roughness on the surface.

For example, the softened region may include a pattern of straight lines having a roughness (e.g., the pattern described in FIG. 6A). For example, the softened region may include a spiral pattern having a roughness (e.g., the pattern described in FIG. 6B). However, examples of the softened region are not limited thereto, and the softened region may include any of various types of patterns and/or roughness formed on the terminal 200.

In this case, the softened region may be formed while having a roughness on the surface of the terminal 200. The roughness (Ra) is measured according to DIN EN ISO 4287:2010-07. In an embodiment, the roughness (Ra) may be, for example, 0.01 µm to 2.50 µm. In an embodiment, the roughness (Ra) may be, for example, 0.01 µm to 2.00 µm. In an embodiment, the roughness (Ra) may be, for example, 0.01 µm to 1.90 µm. In an embodiment, the roughness (Ra) may be, for example, 0.01 µm to 1.80 µm. In an embodiment, the roughness (Ra) may be, for example, 0.01 µm to 1.70 µm. In an embodiment, the roughness (Ra) may be, for example, 0.01 µm to 1.60 µm. In an embodiment, the roughness (Ra) may be, for example, 0.01 µm to 1.50 µm. In an embodiment, the roughness (Ra) may be, for example, 0.01 µm to 1.30 µm. In an embodiment, the roughness (Ra) may be, for example, 0.01 µm to 1.00 µm.

If the roughness (Ra) is less than 0.01 µm, there may be a problem that there is almost no softening effect because the effect of etching does not occur. If the roughness (Ra) exceeds 2.50 µm, irregular oxidation may occur on the surface later, which causes an adverse effect on surface characteristics. Therefore, in an embodiment, the softened region is formed to have a roughness (Ra) of 0.01 µm or more and 2.50 µm or less.

This softened region may be formed, for example, by polishing. The polishing treatment includes, for example, any of various treatments capable of grinding the surface of the terminal 200 by applying a physical force to the surface of the terminal 200. The polishing treatment may include, for example, a treatment of grinding the upper surface of the terminal 200 using sandpaper to form the softened region.

Through this configuration, the secondary battery 100 according to one or more embodiments of the present invention provides, for example, a method for improving weldability with the busbar 1200.

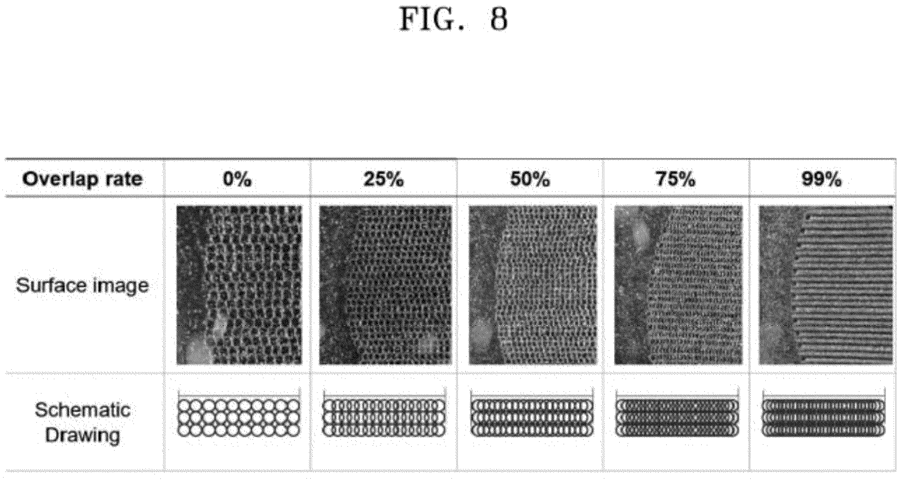

FIG. 8 is a view illustrating an example of a pattern according to an embodiment of the present invention.

The pattern according to an embodiment of the present invention may be formed by at least partially overlapping patterns. The pattern formed by overlapping has an overlap rate of, for example, more than 0% and 99% or less.

FIG. 8 shows an image of the upper surface of the terminal 200 and a schematic drawing of the upper surface for the case in which the patterns overlap each other by 0%, 25%, 50%, 75%, and 99%. As such, the patterns may be formed by overlapping each other in whole or in part.

In this way, the patterns are formed by overlapping each other, such that the amount of etching may be controlled by controlling the heat applied to the surface. In addition, the patterns formed by overlapping each other may control the roughness of the surface.

In FIGS. 6A to 6C, an example of a softened region including a pattern is described. In FIG. 7, an example of a softened region having roughness is described. In FIG. 8, an example of patterns being formed by overlapping is described. However, examples of the softened region are not limited thereto.

Although not shown, the softened region may include a pattern and roughness at the same time. For example, the softened region may form a spiral engraved pattern, and the surface roughness (Ra) may be formed to be 0.01 µm to 1.50 µm.

In addition, although not shown, the softened region may concurrently (e.g., simultaneously) include a pattern and roughness formed by overlapping all or part of patterns. In an embodiment, for example, the softened region may form a triangular engraved pattern formed by overlapping 50%, and the surface roughness Ra may be formed to be 0.01 µm to 1.50 µm.

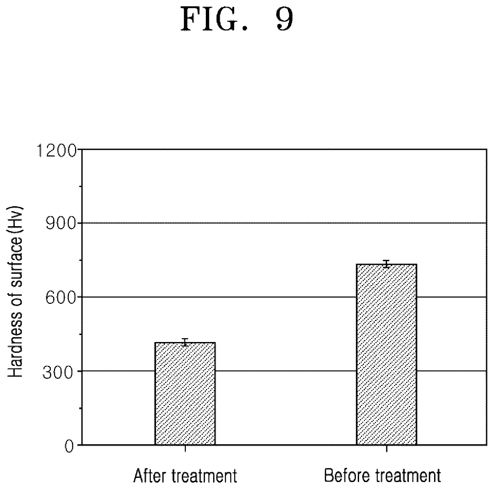

FIG. 9 is a graph illustrating a difference in hardness between a terminal including a softened region and a terminal not including a softened region according to an embodiment of the present invention.

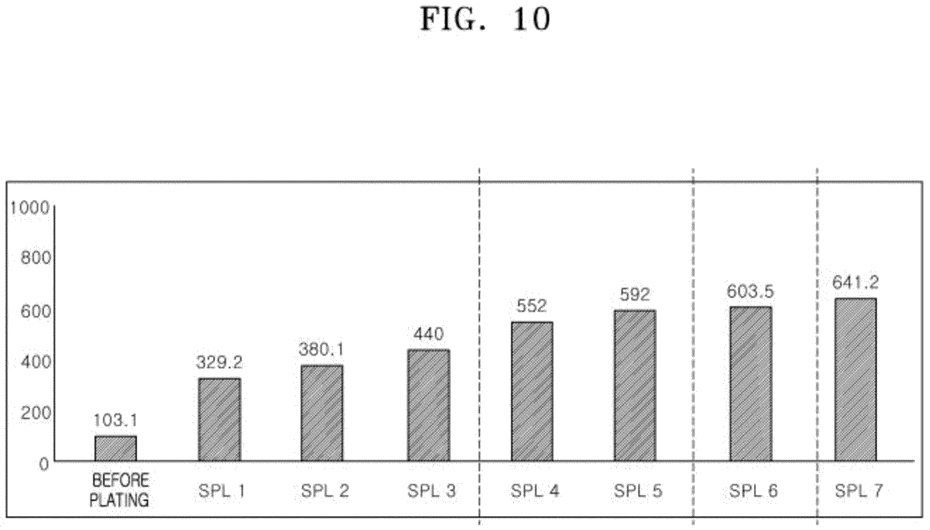

FIG. 10 is a graph for describing weld strength according to the difference in hardness.

In FIG. 9, "After treatment" represents a terminal 200 according to an embodiment of the present invention, which includes a softened region. In FIG. 9, "Before treatment" represents a conventional terminal, which does not include a softened region.

As shown in FIG. 9, it can be seen that the terminal 200 according to an embodiment of the present invention including a softened region is formed to have a lower hardness than the conventional terminal that does not include a softened region.

Meanwhile, FIG. 10 shows experimental data for describing weld strength according to the hardness of the softened region included in the terminal 200. In FIG. 10, "Before plating," which is a terminal before the plating layer 220 is formed, SPL 1, SPL 2, and SPL 3, which are terminals 200 including a softened region having a hardness of 110 Hv to 500 Hv, SPL 4 and SPL 5, which are terminals having a hardness of 500 Hv to 600 Hv, and SPL 6 and SPL 7 having a hardness of 600 Hv or more, are shown. The Vickers hardness is measured according to DIN EN ISO 6507-1.

There were no problems such as weld dispersion or a decrease in weld strength in the terminal before plating. However, in the case of the terminal before plating, the plating layer 220 was not formed, such that there was a problem that the physical properties of the terminal 200 were reduced. In SPL 1 to SPL 3, there was no problem such as weld dispersion or decreased weld strength. In SPL 4 and SPL 5, welding dispersion occurred. In SPL 6 and SPL 7, the weld strength was lowered.

As can be seen from this, the terminal 200 according to an embodiment of the present invention includes a softened region having a hardness in an appropriate range (for example, 500 Hv or less, or, for example, 110 Hv or more and 500 Hv or less), thereby providing a method of improving weld strength with the busbar 1200.

According to one or more embodiments of the present invention, a secondary battery with improved weldability, a battery module including the secondary battery, and/or a method for manufacturing the secondary battery are provided.

For example, a secondary battery according to one or more embodiments of the present invention can have improved weldability between a tab and a terminal.

According to one or more embodiments of the present invention, a secondary battery with improved processing capability, a battery module including the secondary battery, and/or a method for manufacturing the secondary battery are provided.

Although the present disclosure has been described with reference to some embodiments shown in the drawings, these embodiments are merely examples, and it will be understood by those skilled in the art that various modifications and equivalents are possible.

## Claims

1. A secondary battery (100) comprising:
a case (20) accommodating an electrode assembly (10); and
a terminal (30) coupled to the case (20),
wherein the terminal (30) comprises a softened region and the softened region is formed on an upper surface of the terminal (30) in which the terminal (30) is scheduled to be connected to a busbar (1200).

2. The secondary battery (100) as claimed in claim 1, wherein the softened region has a Vickers hardness in the range of 110 Hv to 500 Hv measured according to DIN EN ISO 6507-1.

3. The secondary battery (100) as claimed in claim 1 or 2, wherein the terminal (30) comprises a metal layer (210) and a plating layer (220) on the metal layer (210), and
the softened region is formed on the plating layer (220).

4. The secondary battery (100) as claimed in any one of the preceding claims,
wherein the softened region is formed by surface treatment, and
the surface treatment comprises at least one of laser treatment, polishing treatment, or etching treatment.

5. The secondary battery (100) as claimed in any one of claims 1 to 3, wherein the softened region comprises a pattern formed by engraving.

6. The secondary battery (100) as claimed in claim 5, wherein the pattern comprises at least one of a straight line, a spiral, a dot, a circle, or a polygon.

7. The secondary battery (100) as claimed in claim 5 or 6, wherein the pattern is formed by at least partially overlapping patterns.

8. The secondary battery (100) as claimed in claim 7, wherein the pattern formed by overlapping has an overlap rate of more than 0% and 99% or less.

9. The secondary battery (100) as claimed in any one of the preceding claims, wherein the softened region is formed to have a roughness (Ra) of 0.01 µm to 1.50 µm measured according to DIN EN ISO 4287:2010-07.

10. The secondary battery (100) as claimed in any one of the preceding claims, wherein the terminal (30) is formed of a metal.

11. A battery module (1000) comprising:
a plurality of secondary batteries (100) as defined in any one of the preceding claims;
a housing (1100) accommodating the plurality of secondary batteries (100); and
a bus bar (1200) joined to the softened region and electrically connected to at least some of the plurality of secondary batteries (100).

12. A method for manufacturing the secondary battery (100) according to claim 1, the method comprising forming the softened region on the terminal (30).

13. The method as claimed in claim 12, wherein the forming of the softened region comprises forming the softened region by at least one of laser treatment, polishing treatment, or etching treatment.

14. The method as claimed in claim 13, wherein the laser treatment comprises forming the softened region by irradiating a laser having a frequency in a range of 10 to 1000 kHz.

15. The method as claimed in claim 13 or 14, wherein the laser treatment comprises forming the softened region by irradiating a laser at a speed in a range of 10 to 10,000 mm/s.
